# EUROPEAN PATENT APPLICATION

(11) **EP 1 750 169 A2**
(43) Date of publication of application: **07.02.2007**
(21) Application number: 06076337.2
(22) Date of filing: 30.06.2006
(51) Int. Cl.: G02F 1/13357, B60Q 3/04

(54) **Liquid crystal display with differently-colored localized display areas**

(30) Priority: 03.08.2005 US 196701
(71) Applicant: Delphi Technologies, Inc., Troy, Michigan 48007 (US)
(72) Inventor: Lippmann, Raymond, Howell, MI 48843 (US); Sylvester, Gail M., Frankenmuth, MI 48734 (US); Fye, Michael E., Kokomo, IN 46901 (US); Kenworthy, Tim A., Greentown, IN 46936 (US)
(74) Representative: Denton, Michael John

(57) **Abstract**

A liquid crystal display (10) is disclosed. The liquid crystal display (10) comprises a first plurality of light sources including a first group of light sources (14) and a second group of light sources (14a). The first group of light sources (14) illuminates segments of a first plurality of graphics (56, 58, 60) in a first color. A second plurality of light sources (16) illuminates on segments of a second plurality of graphics (52, 54) in a second color. A prism structure (20) is located over the second plurality of light sources (16) and the second group of light sources (14a) to localize and maintain the illumination of the on segments of the second plurality of graphics (52, 54) in the second color when the first plurality of graphics (56, 58, 60) are illuminated in the first color by the first group of light sources (14).

## Description

### FIELD OF THE INVENTION

The invention relates to liquid crystal displays. More particularly, the invention relates to a liquid crystal display with differently-colored localized display areas.

### BACKGROUND OF THE INVENTION

Liquid crystal displays (LCDs) are transmissive in both the asserted and non-asserted display state and the ratio of the two states is the contrast ratio. For the purposes of discussion, assume the asserted state (i.e., an "on" segment or pixel) is more transmissive than the non-asserted state (i.e. an "off" segment or pixel). Because light leaks through "off" segments, the color of the light beneath the segment is often somewhat visible.

Traditionally, when LCDs are designed to include a localized color section, one technique known in the art is to place a filter behind the off-color display area (i.e., a patch). Usually, the remaining area of the LCD is not filtered to maximize the utilization of the available light energy. Then, an illumination source, which contains wavelengths sufficient to produce respectively different colors associated with each of the localized sections, is used to illuminate the LCD. For this application, the off-color patch tends to have reduced light utilization because of the additional filter losses.

Another traditional technique to localize color patches is to place a black (opaque) mask around the segments in the color patch. This is usually done when filters are used to produce the tone in the patch. While this method prevents the "off state" background color from being visible, the patch appears to be dark if the light source is turned off in the LCD "off state." If the light is left on when the segment is "off" the segment will leak light while its surrounding area will not. Because the eye is very sensitive to contrast, this application often appears as if the segment were either dimly lit (i.e., partly on) or fully lit, depending on other parameters.

Other techniques for providing localized color sections may apply the use of a filter in each of the off-color patch area(s). This technique is described in U.S. Patent No. 5,695,269 and assigned to the assignee of the present invention. However, when a filter is provided in each area of the LCD and if the lamps in both sections of the display are illuminated at the same time, the background color (i.e., "off" state) in both sections may tend to have different colors.

In some applications, a walled-off section may be provided below the color patch so the color patch is lit with one color while the rest of the display is lit with another color. Accordingly, light utilization is not reduced by using filters in one or both color areas. However, even with the application of a walled-off section, the "off areas" may still appear to have different colors. Even further, due to manufacturing tolerances, the walled-off section that separates the areas of different color usually cannot directly abut the LCD. As such, light from one color section may still leak into the other section, thereby shifting the apparent color of both sections in the vicinity of the boundary. This contamination of the color appearance is particularly troublesome with white displays because the eye is very sensitive to chromatic shifts in white tones. Another problem associated with walled-off sections is the thickness of the wall boundary itself. For example, when illumination sources are activated on each side of the wall, the wall thickness gives the appearance of a dark line in the "off area" of the LCD.

As such, a need exists to improve the appearance of localized color sections in an LCD display.

### BRIEF DESCRIPTION OF THE DRAWINGS

The present invention will now be described, by way of example, with reference to the accompanying drawings, in which:
Figure 1 is an exploded view of a liquid crystal display according to an embodiment;
Figure 2 is a partially assembled view of the liquid crystal display according to Figure 1; and
Figure 3 is a top view of a heating, ventilation, and air conditioning (HVAC) control panel for the liquid crystal display according to Figure 1.

### DESCRIPTION OF THE PREFERRED EMBODIMENT

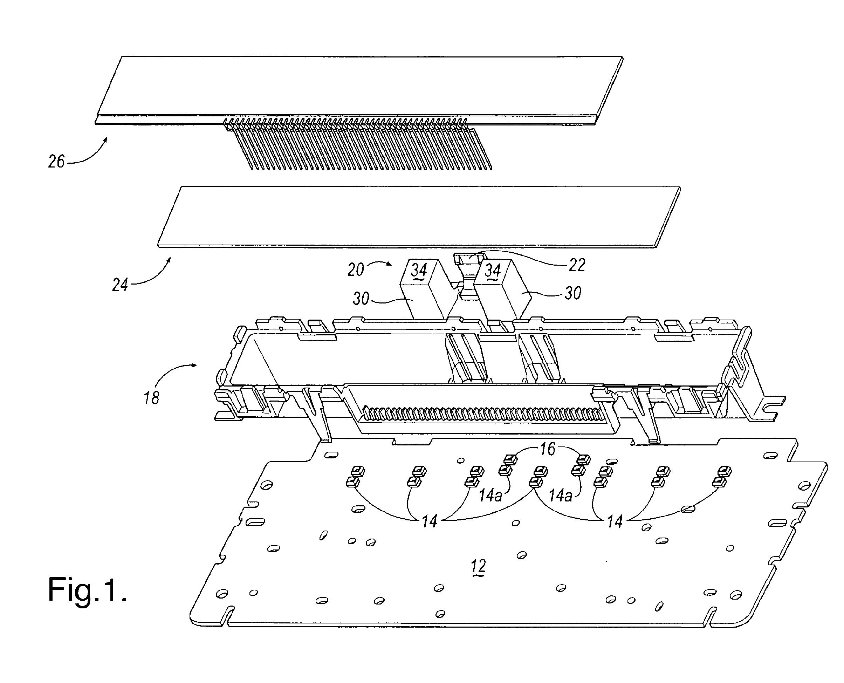

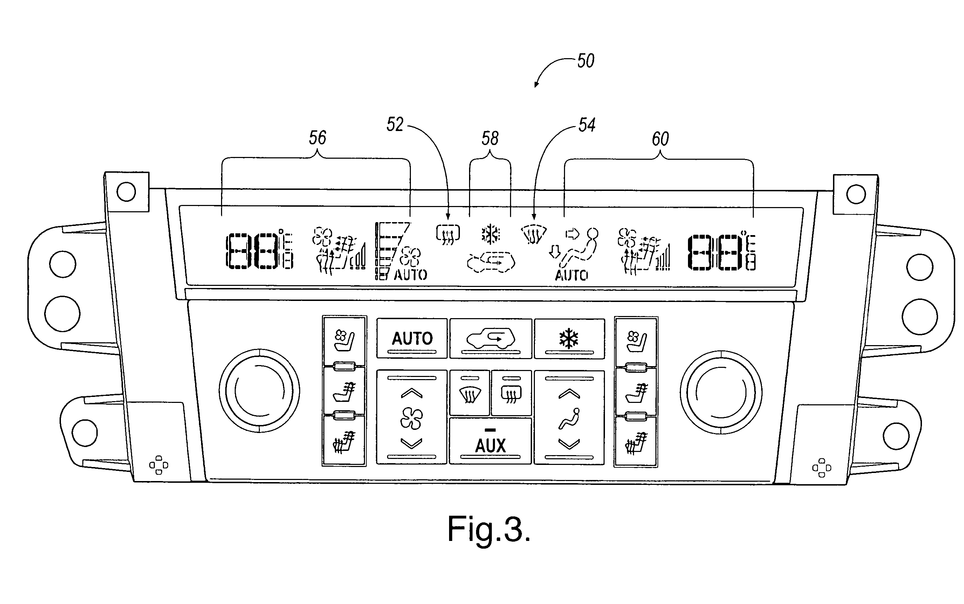

The disadvantages described above are overcome and a number of advantages are realized by an inventive liquid crystal display (LCD), which is shown generally at 10 in Figure 1. The LCD 10 includes a circuit board 12, a first plurality of light sources that are shown generally at reference signs 14, 14a and a second plurality of light sources 16 located proximate the first plurality of light sources 14, 14a. The LCD 10 also includes a light box 18, a prism structure 20, a sheet of plastic material 24, such as a diffuser or a color converting plastic material, and a liquid crystal cell 26. In operation, the LCD 10 provides localized, differently-colored on-state segment illumination of control panel graphics 52-60 (Figure 3). According to the illustrated embodiment, the graphics 52,60 are shown on a heating, ventilation, and air conditioning (HVAC) control panel 50.

The first plurality of light sources, which are generally designated at reference signs 14 and14a, may be further defined as a first group of light sources at reference sign 14 and a second group of light sources at reference sign 14a. In general, the first and second group of light sources 14, 14a within the first plurality of light sources emit light having a first color and wavelength. The second plurality of light sources 16 emit light having a second, different color and wavelength than the first plurality of light sources 14, 14a. The light sources 14, 14a, 16 may comprise any desirable source, such as for example, light emitting diodes (LEDs), incandescent lamps of different color, or the like. Although a first and second plurality of light sources 14, 16 emitting a first and second color, respectively, are shown in the drawings, it will be appreciated that any desirable plurality of light sources having any desirable number of colors may be included in the design of the LCD 10. For example, the LCD may include four plurality of light sources each respectively emitting light in four different colors.

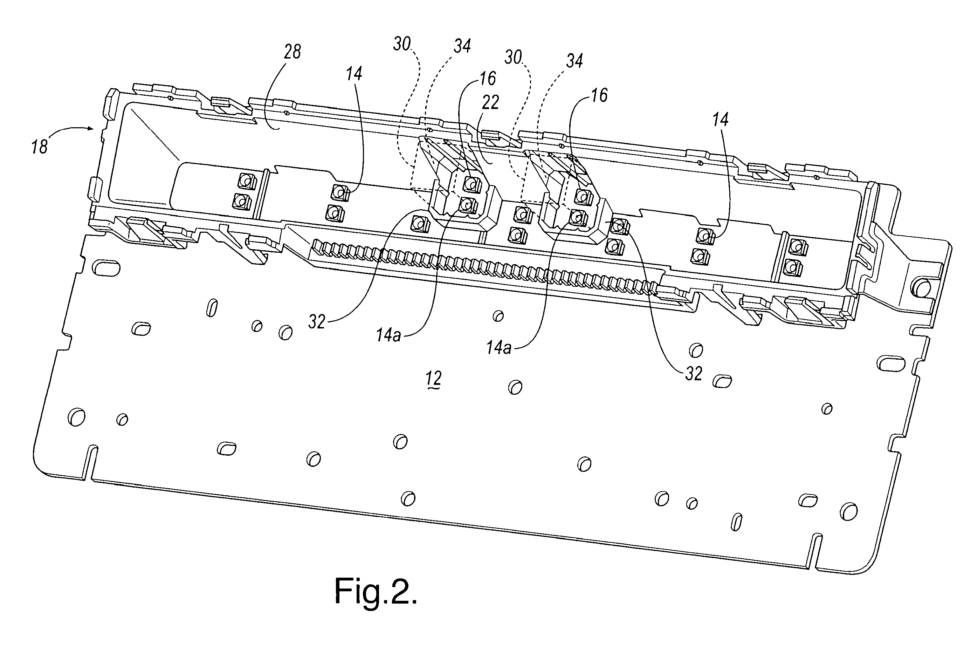

Referring to Figures 1 and 2, the LCD 10 is assembled in the following order. First, the light sources 14, 14a, 16 are arranged on the circuit board 12 in any desirable configuration. As illustrated, the first group of light sources 14 are arranged in a two-by-seven relationship and the second group of light sources 14a are arranged in a one-by-two relationship. The second plurality of light sources 16 are also arranged in a one-by-two relationship adjacent to the one-by-two relationship of the second group of light sources 14a. In reference to Figure 3, which illustrates the layout of the graphics 52-60 on the HVAC control panel 50, the first group of light sources 14 correspond to and illuminate a first plurality of graphics which are identified generally at reference signs 56, 58, and 60, while the second group of light sources 14a and the second plurality of light sources 16 correspond to and illuminate a second plurality of graphics, which are identified generally at reference signs 52 and 54.

Upon positioning the light sources 14, 14a, 16 on the circuit board 12, the light box 18 is attached to the circuit board 12 with fasteners (not shown) and snap clips. As seen more clearly in Figure 2, the light box 18 provides a perimeter of material encompassing the light sources 14, 14a, 16. When secured to the circuit board 12, any light propagated from the light sources 14, 14a, 16 is contained by an inner wall 28 of the light box 18 and directed toward the liquid crystal cell 26. Additionally, the light box 18 engages the circuit board 12 to prevent undesirable light leakage thereabout.

Upon securing the light box 18 to the circuit board 12, the prism structure 20 is secured thereto; however, it will be appreciated the prism structure 20 may be secured to the light box 18 first, and then the light box 18 may be subsequently secured to the circuit board 12. As illustrated, the prism structure 20 includes a snap section 22 that engages the light box 18. As similarly described above with respect to the light box 18 and circuit board 12, the prism structure 20 engages the light box 18 at a shallow skirt 32 of opaque material to prevent undesirable light leakage of the second plurality of light sources 16 into the area of the light box 18 that is occupied by the first group of light sources 14. Upon securing the prism structure 20 to the light box 18 as described above, the sheet of plastic material 24 and liquid crystal cell 26 are positioned over and secured to the light box 18.

Functionally, the prism structure 20 relies on the optical property of right angle rectangular prisms with a sufficiently high index of refraction compared with its surrounding material such that light entering one face can only exit through the same face or the opposing face. The three sets of opposing faces therefore can be considered to be optically isolated from one another. As illustrated, the prism structure 20 includes a pair of substantially solid, rectangular prisms 30 located on each side of the snap section 22. Although only two prisms 30 are shown, it will be appreciated that any desirable number of prisms 30 may be incorporated into the design of the prism structure to function in the following manner.

As illustrated, each rectangular prism 30 isolates one light source from the second plurality of light sources 16 and one light source from the second group of light sources 14a. When isolated in this manner, one of the two light sources from the second group of light sources 14a is used to illuminate off-state segments of the second plurality of graphics 52, 54 in the first color while one of the light sources from the second plurality of light sources 16 is used to illuminate on-state segments of the second plurality of graphics 52, 54 in the second, different color. In order to prevent light of the second color from the light sources 16 from leaking out into the general area of the first plurality of light sources 14, a shallow skirt of opaque material 32 integral with the light box 18 may encase a bottom face of the rectangular prism 30. Although the illustrated embodiment is directed to a rectangular prism 30, it will be appreciated that other shapes also can be used so long as some degree of optical isolation is maintained between the faces separating illumination of the graphic 52, 54 from the illumination in the general area surrounding the graphics 52, 54.

In operation, when the color segment (i.e. the "on" segments) of the second plurality of graphics 52, 54 of the liquid crystal cell 26 are not on, the general color light from the first plurality of light sources 14, 14a is turned on and illuminates the "off" color segments of the liquid crystal cell 26. Accordingly, the background color of the liquid crystal cell 26 is uniform since all of the illumination color is similar. Conversely, when the "on" color segments of the second plurality of graphics 52, 54 of the liquid crystal cell 26 are on, the first group of light sources 14 are used to illuminate "on" segments of the first plurality of graphics 56, 58, 60 in the first color and the second plurality of light sources 16 are used to illuminate "on" segments of the second plurality of graphics 52, 54 in the second, different color.

In relation to the second plurality of graphics 52, 54 over the rectangular prisms 30, when the color segments are changed to the "on" state, the general color light from the first group of light sources 14a under the prism 30 is turned off and the color light from one of the second plurality of light sources 16 for the graphic 52, 54 is turned on. Accordingly, when the "on" segments of the second plurality of graphics 52, 54 are illuminated in the second, different color by the second plurality of light sources 16, the prism 30 localizes and maintains the second, different color of the second plurality of graphics 52, 54 when segments from the first plurality of graphics 56, 58, 60 are illuminated by the first plurality of light sources 14 in the first color.

The transition zone between the on-state graphic color and the off-state general background color can be quite small and depends on the distance from the top surface 34 of the rectangular prism 30 to the liquid crystal cell 26. The transition zone is not dark, as was found in conventional methods with separation walls, but rather, the zone consists of a boundary in which the colors may be somewhat mixed. Preferably, the top surface 34 of the rectangular prism 30 is approximately same size or slightly larger than the area of the graphics 52, 54 to minimize color bleed in "off" areas. However, this bleed is only evident when the area of the graphics 52, 54 is/are in the on state. Accordingly, the portion of the liquid crystal cell with "on" segments diverts attention from the local "off" portions of the liquid crystal cell 26.

The above-described LCD 10 may be illuminated with any desirable combination of colors for background lighting as well as color differentiation at the first plurality of graphics identified generally at 56, 58, 60 and the second plurality of graphics identified generally at 52, 54. According to the illustrated embodiment, the rear defrost graphic 52 and the front defrost graphic 54 may include an orange color while the remaining graphics 56, 58, 60 include a white color, when the color segments of the graphics are in the "on" state. According to another embodiment, the first plurality of light sources 14, 14a may include a stimulant color of a shorter wavelength, such as a blue and/or ultraviolet color, which may be down-converted to a color having a longer wavelength when the stimulant color passes through the color converting plastic material 24. The second plurality of light sources 16 may produce light having a longer wavelength than the stimulant color, which may pass through the color converting plastic material 24 without being converted to a substantially different color.

While the invention has been specifically described in connection with certain specific embodiments thereof, it is to be understood that this is by way of illustration and not of limitation, and the scope of the appended claims should be construed as broadly as the prior art will permit.

## Claims

1. A liquid crystal display (10) comprising:
a first plurality of light sources including a first group of light sources (14) and a second group of light sources (14a), wherein the first group of light sources (14) illuminates segments of a first plurality of graphics (56, 58, 60) in a first color;
a second plurality of light sources (16) that illuminates on segments of a second plurality of graphics (52, 54) in a second color; and
a prism structure (20) located over the second plurality of light sources (16) and the second group of light sources (14a) to localize and maintain the illumination of the on segments of the second plurality of graphics (52, 54) in the second color when the first plurality of graphics (56, 58, 60) are illuminated in the first color by the first group of light sources (14).

2. The liquid crystal display (10) according to Claim 1, wherein the second group of light sources (14a) illuminate the off segments of the second plurality of graphics (52, 54) in the first color when the second plurality of light sources (16) that illuminate the on segments of the second plurality of graphics (52, 54) in the second color are in the off state.

3. The liquid crystal display (10) according to Claim 1 further comprising a light box (18) secured to a circuit board (12) providing a perimeter of material encompassing the first and second plurality of light sources (14, 14a, 16), wherein a liquid crystal cell (26) is operationally secured to the light box (18) and circuit board (12).

4. The liquid crystal display (10) according to Claim 3 further comprising a sheet of color converting plastic material (24) placed between the light box (18) and the liquid crystal cell (26) to convert light propagating from the first plurality of light sources (14) and/or the second plurality of light sources (16) toward the liquid crystal cell.

5. The liquid crystal display (10) according to Claim 3, wherein the prism structure (20) is secured to the light box (18) by a snap section (22).

6. The liquid crystal display (10) according to Claim 5, wherein the prism structure (20) includes at least two substantially solid, rectangular prisms (30) located on each side of the snap section (22).

7. The liquid crystal display (10) according to Claim 6, wherein each rectangular prism (30) is placed behind of the second plurality of graphics (52, 54).

8. The liquid crystal display (10) according to Claim 1, wherein the first and second plurality of light sources (14, 14a, 16) are light emitting diodes.

9. The liquid crystal display (10) according to Claim 4, wherein the first plurality of light sources (14, 14a) include a blue and/or ultraviolet light color having a shorter wavelength that is down-converted to a color of light of longer wavelengths when the blue or ultraviolet colored light passes through the color converting plastic material (24).

10. The liquid crystal display (10) according to Claim 9 where the second plurality of light sources (16) produce light having a longer wavelength than the blue or ultraviolet colored light, wherein the light from the second plurality of light sources (16) passes through the color converting plastic (24) without being converted to a substantially different color.

11. The liquid crystal display (10) according to Claim 1 wherein the first and second plurality of light sources (14, 14a, 16) are incandescent lamps of different colors.
